(19) Europäisches Patentamt
European Patent Office
Office européen des brevets

(11) **EP 1 761 381 B1**

(12) **FASCICULE DE BREVET EUROPEEN**

(45) Date de publication et mention de la délivrance du brevet:
**12.09.2018 Bulletin 2018/37**

(21) Numéro de dépôt: **05747890.1**

(22) Date de dépôt: **19.05.2005**

(51) Int Cl.:
**B32B 17/10** *(2006.01)*  **C09K 21/02** *(2006.01)*
**C03C 27/12** *(2006.01)*

(86) Numéro de dépôt international:
**PCT/EP2005/052307**

(87) Numéro de publication internationale:
**WO 2005/115746 (08.12.2005 Gazette 2005/49)**

(54) **VITRAGE ANTI-FEU**

BRANDSCHUTZVERGLASUNG

FIREPROOF GLAZING

(84) Etats contractants désignés:
**AT BE BG CH CY CZ DE DK EE ES FI FR GB GR HU IE IS IT LI LT LU MC NL PL PT RO SE SI SK TR**

(30) Priorité: **27.05.2004 BE 200400264**

(43) Date de publication de la demande:
**14.03.2007 Bulletin 2007/11**

(73) Titulaire: **AGC Glass Europe**
**1348 Louvain-la-Neuve (BE)**

(72) Inventeurs:
• **ALDENHOF, Olivier,**
**Glaverbel**
**B-6040 Jumet (BE)**
• **DURY, Bertrand,**
**Glaverbel**
**B-6040 Jumet (BE)**
• **GOELFF, Pierre,**
**Glaverbel**
**B-6040 Jumet (BE)**

(74) Mandataire: **Bayot, Daisy et al**
**AGC Glass Europe**
**Technovation Centre**
**IP Department**
**Rue Louis Blériot, 12**
**6041 Gosselies (BE)**

(56) Documents cités:
**EP-A- 1 044 801**     **FR-A- 2 027 646**
**FR-A- 2 372 029**     **FR-A- 2 504 117**
**FR-A- 2 512 008**     **FR-A- 2 679 549**
**FR-A- 2 690 200**     **US-A1- 2003 180 543**
**US-B1- 6 379 825**

EP 1 761 381 B1

**Description**

La présente invention concerne les vitrages anti-feu.

De façon plus spécifique, l'invention est relative aux vitrages comportant une ou plusieurs couches intumescentes.

Les vitrages anti-feu de ce type doivent répondre à des caractéristiques bien définies, notamment à des normes telles que les normes européennes EN 1363-1 et 1364-1 pour des parois, ou 1634-1 pour des portes et fenêtres. Ces caractéristiques visent bien entendu les propriétés de résistance au feu, mais à ces caractéristiques fondamentales des vitrages en question on doit en ajouter d'autres qui sont fixées par les modes de fabrication connus, ou par les exigences des utilisateurs.

Un mode de construction de ces vitrages, consiste à assembler plusieurs feuilles de verre séparées par des couches de matériaux intumescents. Ces derniers sont constitués le plus souvent de silicates alcalins hydratés. Ces matériaux sous l'effet de la chaleur s'expansent en formant une mousse opaque au rayonnement, mousse qui maintient les parois de verre en position même lorsque ces dernières se fragmentent sous l'effet de la chaleur.

Les couches intumescentes en plus de leurs propriétés de résistance au feu doivent répondre à une série d'exigences. Elles doivent notamment être parfaitement transparentes, ne présenter aucun défaut tel que la présence de bulles ou d'un voile diffusant la lumière. De tels défauts sont inhérents aux composés constituant ces couches et aux modes de préparation de ces couches.

Le mode usuel de préparation des couches de silicates alcalins hydratés comprend la formation d'une solution de ces composés, le dépôt sur une feuille de verre d'une quantité uniformément répartie de cette solution pour constituer un film de l'ordre de quelques millimètres d'épaisseur, puis le séchage de ce film jusqu'à former un matériau solide transparent. Ces opérations de séchage sont l'objet de techniques délicates et difficiles à maîtriser de façon parfaite. En particulier l'obtention d'une couche dépourvue de bulles passe le plus souvent par un séchage prolongé. Ce séchage est d'autant plus long que la couche est plus épaisse. En fait, le temps de séchage croît de façon beaucoup plus que proportionnelle à l'épaisseur. Pour cette raison il est préférable de ne pas trop augmenter l'épaisseur de la ou des couches intumescentes de ces vitrages.

Par ailleurs, l'efficacité de la couche, pour ce qui concerne ses propriétés anti-feu, dépend directement de l'épaisseur de celle-ci. Pour obtenir des propriétés anti-feu répondant aux exigences les plus usuelles, une épaisseur de plusieurs millimètres est nécessaire. Mais l'expérience montre qu'au-delà de 2 ou 3mm d'épaisseur, le temps de séchage devient industriellement rédhibitoire. Pour ces raisons, il est usuel de distribuer le matériau intumescent en plusieurs couches chacune d'épaisseur plus limitée. Ces couches sont séparées par autant de feuilles de verre.

Si le fractionnement du matériau intumescent facilite le séchage, il conduit cependant à une multiplication des éléments constituant le vitrage, entraînant un éventuel coût supplémentaire.

Aux contraintes indiquées ci-dessus s'en ajoutent d'autres concernant l'utilisation de feuilles de verre de grandes dimensions. Pour satisfaire à toutes les demandes les vitrages sont produits en panneaux de plus de deux mètres sur trois. Ces panneaux sont ensuite découpés aux dimensions les plus variées demandées par les clients. La manipulation de feuilles de verre de ces dimensions au cours de la fabrication des vitrages est d'autant plus mal-commode que les feuilles sont moins épaisses.

La multiplication des feuilles de verre qui est induite par la nécessité de répartir la masse de matière intumescente en couches relativement minces conduit donc rapidement, jusqu'à présent, à des assemblages très lourds et par ailleurs relativement épais. Ceci engendre un certain nombre de contraintes en ce qui concerne les châssis dans lesquels ces vitrages peuvent être insérés.

Les vitrages anti-feu selon l'invention sont tels qu'indiqué à la revendication 1. Ces vitrages résistent à des épreuves au feu parmi les plus sévères, à savoir combinant l'étanchéité et l'isolation pendant des périodes très longues de 90 minutes (EI90) ou même 120 minutes (EI120), et se présentent sous des épaisseurs respectivement au plus égales à 37 et 54mm.

En plus des propriétés de résistance au feu les vitrages doivent offrir également des qualités mécaniques pour les conditions d'utilisation « normales », autrement dit hors de l'exposition au feu. Celles-ci dépendent étroitement de l'utilisation qui en est faite, mais même pour celles ne requérant pas des performances très particulières, un minimum est requis, que des épaisseurs de verre très réduites ne permettent pas de satisfaire. Pour améliorer les qualités mécaniques de ces vitrages deux types de solutions ont été proposés si l'on écarte la solution consistant à utiliser des verres armés, ces derniers n'offrant pas la qualité optique demandée. La première solution consiste à modifier les verres utilisés. Un accroissement de l'épaisseur permet d'améliorer la résistance mécanique mais a pour contrepartie une épaisseur totale plus importante. Cette tendance est d'autant moins souhaitable que le besoin de renforcer les structures apparaît essentiellement pour les vitrages les moins performants au feu, et par conséquent qui doivent être les moins épais. Un accroissement de l'épaisseur des feuilles de verre est alors particulièrement sensible sur la structure. Autrement dit, l'amélioration de la résistance mécanique passant par la présence d'une ou plusieurs feuilles de verre de plus forte épaisseur, n'est pas proportionnée à l'effet qui en résulte en terme de résistance au feu pour ces structures les plus légères.

Une autre façon de procéder pour améliorer la résistance mécanique consiste à faire des assemblages comportant une ou plusieurs feuilles intercalaires de matériau plastique tel que le PVB ou l'EVA. Ces feuilles confèrent une tenue mécanique à froid améliorée, mais leur présence dans des structures relativement légères s'accompagne généralement d'une dégradation de la résistance au feu. Dans ces structures légères, ces produits synthétiques sont trop exposés à une rapide destruction sous l'effet de la chaleur. Pour cette raison s'ils sont bien utilisés dans les structures plus lourdes, où leur position au coeur de ces structures, fait qu'ils sont moins vite exposés aux températures de décomposition, leur utilisation dans les structures légères n'est pas sans risque pour leur performance au feu. A l'inverse dans les structures plus complexes, la présence d'intercalaires peut améliorer la performance au feu en limitant les risques de ce qui est désigné comme « casse monolithique ». Sous cette appellation on désigne la rupture des feuilles soumises au feu, par larges pans, entraînant une destruction prématurée, avant que chacun des constituants, et en particulier les couches intumescentes aient pu jouer pleinement leur rôle.

Les inventeurs se sont donc évertués à produire des vitrages qui permettent de répondre aux différentes exigences évoquées ci-dessus, exigences comme indiqué qui sont l'objet de solutions partielles souvent contraires.

Pour atteindre les propriétés souhaitées, les inventeurs ont réalisé des vitrages de structure complexe comprenant des alternances de couches intumescentes à base de silicates alcalins hydratés d'une part, et de feuilles de verre d'autre part. Les couches de matériau intumescent des vitrages selon l'invention ne présentent pas une épaisseur supérieure à 2,0mm, et pas inférieure à 1,4mm. Avantageusement l'épaisseur des couches intumescentes est comprise entre 1,5 et 1,8mm.

Pour des épaisseurs supérieures à 2,0mm les qualités optiques sont très difficiles à obtenir dans des conditions de temps de préparation, notamment de séchage, industriellement acceptables. A moins de 1,4mm, le nombre des couches nécessaires, et par suite le nombre de feuilles de verre entrant dans la composition du vitrage final, sont désavantageux du point de vue du coût de ces vitrages, et de surcroît, l'épaisseur de l'ensemble ne répond pas aux contraintes usuelles.

Pour ces épaisseurs de matériau intumescent cependant, il devient nécessaire de multiplier le nombre des couches. Pour respecter les exigences il est alors nécessaire d'associer ces couches avec des feuilles de verre en nombre et épaisseur bien établis.

Les vitrages selon l'invention associent un nombre de feuilles de verre au moins égal à celui des couches intumescentes présentes dans ce vitrage.

Lorsque ces deux nombres sont égaux, la structure présente ceci de particulier, les deux faces extérieures devant nécessairement êtres celles de feuilles de verre, que deux couches intumescentes sont accolées l'une à l'autre. Cette disposition n'est pas contraire aux exigences indiquées précédemment pour ce qui concerne la limite supérieure des épaisseurs qui peuvent être obtenues par séchage. L'assemblage qui conduit à accoler deux couches de matériau intumescent intervient en effet une fois le séchage réalisé. Bien entendu dans cette opération, le produit final comporte une couche intumescente qui est alors double, et les limites d'épaisseur indiquées précédemment se trouvent aussi doublées pour cette couche formée en accolant deux couches préalablement séchées. Ainsi, les couches « doubles » peuvent aller jusqu'à 4mm d'épaisseur.

Il faut remarquer que ces couches doubles conservent la trace de la façon dont elles sont obtenues. L'assemblage de deux couches intumescentes, ne fait pas disparaître complètement les particularités qui s'attachent à la surface de ces couches. Le séchage conduit à la formation d'une « peau » particulièrement sèche. Cette peau se retrouve au coeur de la couche intumescente formée lors de cet assemblage. Une analyse détaillée des produits permet de distinguer ce type d'assemblage, d'une couche unique de même épaisseur.

Lorsque le nombre de couches et de feuilles de verre est identique, les vitrages selon l'invention comportent au moins deux assemblages formés de deux couches accolées, et de surcroît autant de feuilles de matériau intercalaire moins une qu'il existe de « doubles » couches. Il est en effet possible de multiplier les doubles couches, mais ceci conduit à assembler alors des feuilles de verre au moyen de feuilles intercalaires du type utilisé pour la constitution traditionnelle des vitrages feuilletés. Il s'agit notamment de feuille de polyvinylbutyral ou d'éthylène vinyl acétate.

Toujours lorsque le nombre de feuilles de verre est égal à celui des couches intumescentes, l'épaisseur des feuilles de verre doit rester dans certaines limites. En pratique ces feuilles n'ont pas plus de 4mm d'épaisseur et avantageusement pas plus de 3,5mm. De manière préférée cette épaisseur n'est pas supérieure à 3,1mm.

Dans les vitrages répondant à ces conditions l'épaisseur des feuilles de verre peut être uniforme. Cette façon de procéder présente l'avantage de permettre la constitution des vitrages au moyen d'éléments tous identiques. Il est néanmoins possible de procéder à l'assemblage à partir d'éléments différents. Pour les produits qui doivent rester relativement légers, la présence d'au moins une feuille de verre d'épaisseur plus importante peut offrir des caractéristiques mécaniques avantageuses sans entraîner une épaisseur totale inadéquate.

Lorsque le nombre de feuilles de verre est supérieur à celui des couches intumescentes, pour maintenir les conditions relatives à l'épaisseur totale du verre il est nécessaire que les feuilles de verre, ou au moins celles en nombre égal à celui des couches intumescentes, soient d'épaisseur bien limitée. Selon l'invention lorsque le nombre de feuilles de verre et supérieur à celui des couches intumescentes, au moins un nombre égal à celui de ces couches présente une épaisseur qui n'est pas supérieure à 2,5mm. De préférence cette épaisseur n'est pas supérieure à 2,3mm et avantageusement pas supérieure à 2,1mm.

Profitant du fait que l'épaisseur d'un nombre important de feuilles de verre de l'assemblage est relativement limitée, il est possible, tout en conservant une épaisseur totale convenable, de disposer au moins une feuille de verre plus épaisse pour rigidifier et améliorer la résistance mécanique de l'ensemble. L'épaisseur de cette feuille supplémentaire reste néanmoins limitée pour ne pas accroître le poids et l'épaisseur de l'ensemble de manière excessive. Elle est avantageusement de 5mm et plus, et de préférence de 6mm et plus. L'épaisseur de cette feuille ne dépasse pas normalement 10mm.

La ou les feuilles supplémentaires peuvent être de type monolithique. Elles peuvent également se présenter sous forme d'un feuilleté constitué de deux feuilles de verre réunies de façon traditionnelle par une feuille intercalaire d'un matériau plastique. On utilise à cet effet ordinairement une feuille de PVB (polyvinylbutyral) ou d'EVA. L'utilisation d'un feuilleté confère aux vitrages des qualités mécaniques bien connues. Comme indiqué précédemment, l'utilisation des verres feuilletés est de préférence réservée aux mises en oeuvre dans lesquelles la feuille plastique ne risque pas d'être trop directement exposée au feu. Il s'agit donc de structures relativement complexe, ou de structures dans lesquelles le panneau feuilleté est situé de façon dissymétrique du côté qui n'est pas susceptible d'être exposé au feu.

Lorsqu'une feuille monolithique plus épaisse fait partie de la structure, sa position n'est pas aussi critique que pour le feuilleté. Elle est néanmoins de préférence située du côté exposé au feu. L'expérience montre que même soumise au choc thermique conduisant à sa rupture, la protection de la couche intumescente sousjacente est mieux assurée. L'inertie thermique de cette feuille plus épaisse conduit notamment à une répartition plus homogène de la chaleur et par suite à une expansion plus uniforme de cette couche, évitant l'arrachage prématuré des morceaux de la feuille brisée.

Le choix de l'emplacement de la feuille plus épaisse ou du feuilleté, peut être guidé par d'autres considérations. En particulier intervient de manière très importante la nécessité d'uniformiser le plus possible les éléments qui entrent dans la constitution de ces structures comme il est précisé plus loin.

Comme dans les assemblages comprenant un nombre égal de feuilles de verre et de couches intumescentes, il est possible d'accoler plusieurs couches intumescentes dans des structures comprenant des feuilles de verre supplémentaires monolithiques ou feuilletées. Le feuilletage peut aussi concerner les feuilles de verre répondant aux critères d'épaisseur indiqués précédemment.

Si, par ailleurs, par principe, il est possible d'avoir des feuilles de verre et des couches intumescentes qui leur sont associées, de différentes épaisseurs et même de natures différentes, en pratique, il est souhaitable de constituer ces assemblages à partir d'un nombre d'éléments distincts aussi restreint que possible. Pour cette raison avantageusement les vitrages selon l'invention sont constitués de feuilles de verre qui, à l'exception éventuelle de la feuille, ou des feuilles dites supplémentaires, sont toutes de même épaisseur. De la même façon les couches intumescentes associées à ces feuilles de verre sont avantageusement de même composition et de même épaisseur.

Ces choix permettent de constituer les vitrages au moyen d'un seul type de produit formé d'une feuille de verre sur laquelle une couche de matériau intumescent à été coulée puis séchée. Cette uniformisation de la production est un facteur certain d'économie. Pour accentuer cette tendance, on s'efforce encore de faire en sorte que les mêmes combinaisons élémentaires feuille de verre/couche intumescente soient utilisées pour la constitution des vitrages de catégories différentes. Pour passer de l'une à l'autre, il est avantageux de pouvoir simplement associer un nombre différent de ces éléments combinés, un vitrage dont la résistance au feu est plus élevée correspondant alors à un nombre plus grand de ces éléments.

Dans le processus d'assemblage des éléments, on peut aussi procéder à des assemblages partiels d'unités modulaires, précédant l'assemblage final. A titre indicatif, comme il sera détaillé dans les exemples de mise en oeuvre, des modules comportant deux, trois ou quatre feuilles de verre identiques, chacune portant une couche de silicate alcalin préalablement séchée, peuvent être réunies par les techniques usuelles de traitement dans ce domaine, essentiellement un collage par étuvage sous pression de ces feuilles, pour constituer des modules. Ces modules comportent une face constituée par une feuille de verre, et une face présentant la couche intumescente. Ces modules peuvent ensuite être associés soit à une feuille constituant la seconde face du vitrage, soit par l'intermédiaire d'une feuille (monolithique ou feuilletée) à un module qui peut être différent, mais qui est de préférence identique. Dans ces conditions (assemblage de deux modules identiques) la structure est symétrique et le verre d'épaisseur éventuellement différente, ou le verre feuilleté, se trouve au milieu de la structure.

Les feuilles de verre utilisées selon l'invention sont le plus habituellement en verre silico-sodo-calcique usuel. Elles peuvent le cas échéant être remplacées en totalité ou en partie par des feuilles de verre présentant des caractéristiques mécaniques et thermiques améliorées. Il peut s'agir notamment de feuilles de verre présentant un coefficient d'expansion plus faible, assurant ainsi une meilleure résistance à la déformation sous l'effet de la chaleur. Il s'agit de compositions bien connues par exemple de borosilicates. Des verres de ce type présentent avantageusement un coefficient d'expansion qui n'est pas supérieur à $7,5.10^{-6}/°C$.

Les feuilles peuvent aussi avoir subi des traitements notamment de type trempe chimique ou thermique, pour leur conférer des contraintes favorisant leur tenue mécanique.

L'invention est décrite de manière détaillée dans la suite dans différents exemples de mise en oeuvre et en faisant référence aux planches annexées dans lesquelles :

> la figure 1 représente un composant élémentaire des vitrages selon l'invention ;

> la figure 2 montre le principe d'assemblage pour constituer les vitrages à partir des composants élémentaires ;

> les figures 3 et 4 illustrent deux modes de réalisation d'un vitrage selon l'invention formés uniquement de composés élémentaires ;

> les figures 5, 6 et 7 montrent deux modes de réalisation de vitrages selon l'invention comportant en plus des composants élémentaires des feuilles de verre additionnelles ;

> les figures 8 et 9 représentent d'autres modes de réalisation de vitrages selon l'invention comportant des assemblages feuilletés dans leur structure.

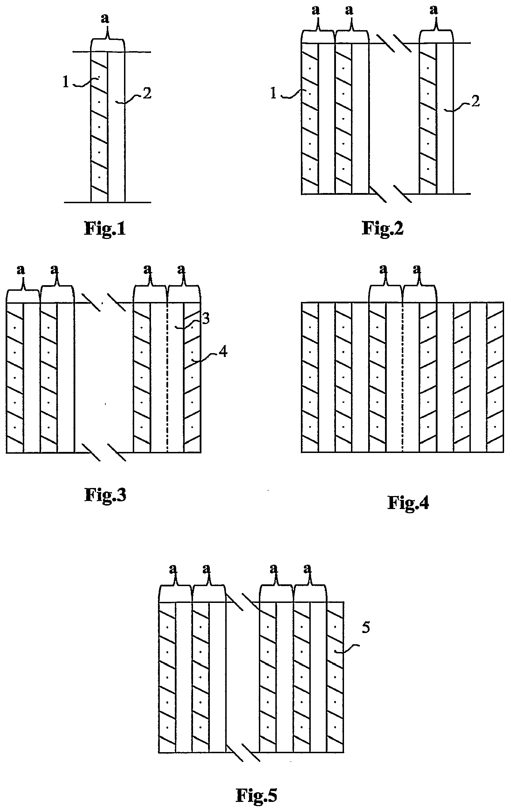

Comme indiqué la production des vitrages visés par l'invention passe par la formation d'une couche de silicate alcalin hydraté solide et transparent, à partir d'une solution qui est progressivement séchée. La formation de cette couche et son séchage sont effectués directement sur une feuille de verre. L'élément de base (a) tel que schématisé à la figure 1 comprend une feuille de verre (1) sur laquelle se trouve une couche de silicate alcalin hydraté préalablement partiellement séchée (2).

La formation des vitrages selon l'invention passe par l'assemblage de plusieurs éléments de base (a), comme représenté à la figure 2. La structure assemblée comporte une succession de feuilles de verre (1) et de couches de silicate alcalin hydraté (2). Le nombre d'éléments de base est d'autant plus élevé que la résistance au feu doit être plus importante.

Pour la formation des vitrages anti-feu, il est bien entendu nécessaire de faire en sorte que les deux faces externes soient constituées de feuilles de verre. Les assemblages tels que représentés à la figure 2 ne sont donc pas suffisants. Une façon de réaliser les vitrages consiste donc à appliquer deux couches de silicates alcalins hydratés l'une sur l'autre, comme représenté aux figures 3 et 4. Les couches ainsi accolées peuvent se situer à des emplacements divers dans la structure. La figure 3 montre un vitrage dans lequel le dernier élément de base (a) est ainsi appliqué par sa couche intumescente sur la couche analogue de l'élément précédent. La structure ainsi constituée uniquement d'éléments de base comporte autant de feuilles de verre que de couche de silicate alcalin hydraté, mais deux de ces dernières sont rassemblées formant bien entendu une couche de plus forte épaisseur (3). La feuille de verre (4) du dernier élément constituant ici la deuxième face externe du vitrage.

Le collage des deux couches intumescentes, en plus de l'épaisseur, est identifiable par la structure de ces couches. Leur mode de formation permet de distinguer la surface exposée au séchage du reste de la couche. La présence de deux surfaces accolées conserve des particularités au coeur de la couche formée de deux couches élémentaires.

La position de la « double couche » peut se situer à tous les niveaux dans la structure finale. La figure 3 présent cette double couche totalement décentrée. La figure 4 montre à l'inverse la double couche au centre du vitrage. Ce dernier type est en particulier obtenu lorsque l'on procède à la formation du vitrage par assemblage de « modules » préalablement constitués eux mêmes par l'assemblage de composants élémentaires (a). Dans l'exemple présenté, chaque module est formé de trois éléments de base (a).

Ce type d'assemblage peut donner lieu à des combinaisons très variées susceptibles de répondre à différents modes d'utilisation.

Par ailleurs les vitrages selon l'invention, en dehors des éléments de base (a), peuvent encore comprendre d'autres composants. Les figures 5 à 9 illustrent différents vitrages comportant des éléments supplémentaires.

La figure 5 montre un assemblage d'une série d'éléments (a) auxquels une feuille de verre additionnelle est associée pour « recouvrir » la dernière couche de silicate alcalin hydraté. Dans la forme présentée la dernière feuille est de même épaisseur que celle des éléments (a). Une structure identique peut être obtenue par l'assemblage de deux modules formé eux-mêmes de plusieurs éléments de base (a) en interposant entre les deux couches de silicate de chacun des deux modules une feuille de verre additionnelle.

Le fait d'utiliser des feuilles et des couches intumescentes relativement minces permet d'atteindre des vitrages également peu épais. Néanmoins ce choix conduit à limiter la résistance mécanique en particulier pour les structures les plus légères. Le gain d'épaisseur permet éventuellement de compléter les assemblages formés d'éléments (a) de faible épaisseur par une feuille de verre sensiblement plus épaisse pour atteindre notamment à des propriétés mécaniques améliorées.

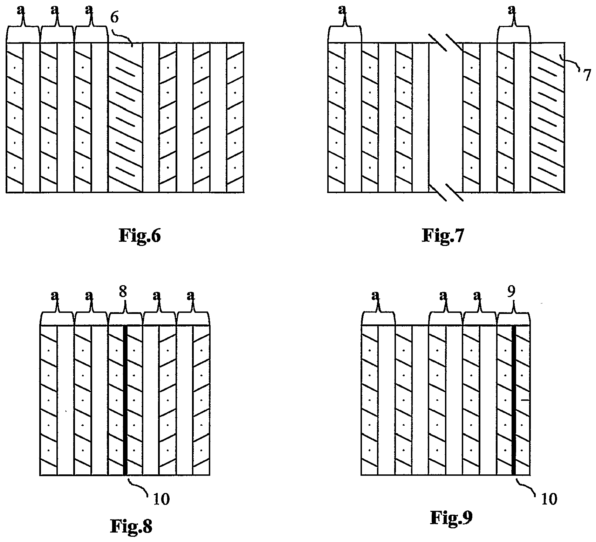

Les figures 6 et 7, illustrent la constitution de vitrages qui comportent une feuille de verre (6,7) plus épaisse que celle des éléments (a). A la figure 6 la feuille épaisse est située au centre entre deux modules chacun dans l'exemple comprenant trois éléments (a). A la figure 7, la feuille plus épaisse (7) constitue une face externe du vitrage.

La présence d'une feuille épaisse a pour but de renforcer la résistance mécanique du vitrage en dehors de l'exposition au feu, pour satisfaire aux exigences variées qui peuvent être celles de ces vitrages dans leur utilisation « ordinaire » et particulièrement lorsque ceux-ci entrent dans la composition de vitrages de cloison, de porte etc. Pour des applications nécessitant une résistance encore plus élevée, en particulier pour des vitrages utilisés en façade, il peut être avantageux de constituer des assemblages comportant des intercalaires plastiques, tels que ceux entrant dans les vitrages feuilletés de sécurité. Les intercalaires en question sont bien connus des verriers. Il s'agit le plus habituellement de feuilles de PVB (polyvinylbutyral) ou d'EVA. Ces produits transparents permettent lors de la rupture des feuilles de verre de maintenir les fragments en position évitant ainsi les dangers occasionnés par la chute éventuelle de ces fragments. La feuille de matériau organique peut encore contenir des additifs améliorant sa résistance au feu.

Les figures 8 et 9 illustrent deux structures incorporant une feuille (10) intercalaire plastique. La formation de ces structures est analogue à celles représentées aux figures 6 et 7, la feuille épaisse (7) étant remplacée par un verre feuilleté (11) comportant l'intercalaire (10).

La présence de l'intercalaire présente des avantages en plus de ceux concernant la résistance aux chocs. Les produits en question constituent en particulier une barrière aux UV susceptibles de conduire au vieillissement des couches intumescentes. Le vieillissement de ces couches peut entraîner l'apparition d'un voile, ou celle de bulles. La protection contre les UV est donc particulièrement souhaitable pour les vitrages exposés aux UV comme les vitrages de façade. Dans ce cas il est souhaitable de disposer le feuilleté du coté du vitrage le plus directement exposé aux UV. Un vitrage du type illustré à la figure 9 est préféré à ceux dans lesquels la feuille intercalaire se situe au coeur, comme représenté à la figure 8.

Dans tous ces exemples les feuilles sont de verre silico-sodo-calcique clair.

Les couches intumescentes sont constituées de silicate alcalin hydraté, avec un ratio molaire $SiO_2/Na_2O$ de 3,3. La solution initiale déposée sur les feuilles avant séchage comporte en outre 7% en poids de glycérine et 0,5% en poids de TMHA (hydroxyde de tétraméthyl-ammonium) et 65% d'eau.

Après séchage en étuve ventilée et à degré hygrométrique régulé, la teneur en eau du matériau est ramenée à environ 20%. Le séchage est obtenu dans un cycle de 24 heures.

Les feuilles portant les couches de silicate alcalin hydraté sont assemblées par calandrage ou par pré-collage sous vide, suivi d'un étuvage sous pression pendant 1 heure à 120°C.

Nous donnons dans la suite la composition de différents vitrages anti-feu constitués de telle sorte qu'ils répondent aux exigences de l'invention. En particulier, les vitrages proposés formés à partir d'éléments de base associés éventuellement en modules dont la réunion constitue la structure complète, permet d'améliorer le rendement de production globale, l'élimination éventuelle d'éléments défectueux se limitant au seul élément de base concerné et non au vitrage complet.

Dans la suite, par convention les différents constituants sont notés de la façon suivante :

> chaque feuille de verre est indiquée par son épaisseur (en mm ;)
> chaque couche intumescente est notée par (/) ;
> chaque feuille intercalaire plastique de type PVB est notée par (:)

Les vitrages suivants ont étés constitués. Ils correspondent à des assemblages de résistance au feu EI90 :

$$2/2/2/2/2 : 2/2/2/2/2 \qquad (1)$$

$$2/2/3/2/2 : 2/2/3/2/2 \qquad (2)$$

$$2/2/4/2/2 : 2/2/4/2/2 \qquad (3)$$

$$2/2/2//2 : 2//2/2/2 \qquad (4)$$

$$2/2//2/2 : 2/2//2/2 \qquad (5)$$

$$2//2/2/2 : 2/2/2//2 \qquad (6)$$

et

$$3/3/3//3 : 3//3/3/3 \qquad (7)$$

$$3/3//3/3 : 3/3//3/3 \qquad (8)$$

$$3//3/3/3 : 3/3/3//3 \qquad (9)$$

Le vitrage d'essai (2) au test au feu résiste 100mn. Cette structure est particulièrement préférée associant de bonnes propriétés à une épaisseur totale limitée.

Le vitrage essayé était de dimensions 1200x2300mm. La feuille intercalaire est en PVB de 0,76mm.

La quantité de solution déposée sur chaque feuille de verre avant séchage était de 4,2 litre/m². Après séchage chaque couche intumescente était de 1,56mm d'épaisseur. L'épaisseur totale du vitrage était de 34,9mm.

Le vitrage d'essai (7) de mêmes dimensions que le précédent, comportant un nombre moins élevé de feuilles de verre, résiste un peu moins longtemps à l'expérience. La résistance au feu s'établit à 90mn.

Pour ce vitrage la même composition de départ est déposée sur les feuilles de verre à raison de 4 litre/m². Après séchage chaque couche intumescente est de 1,43mm d'épaisseur. L'épaisseur totale du vitrage est 35mm.

Les vitrages suivants ont étés constitués qui correspondent à des assemblages de résistance au feu EI 120 :

$$2/2/2/2/2 : 2/2/2/2/2 : 2/2/2/2/2 \qquad (10)$$

$$2/2/3/2/2 : 2/2/3/2/2 : 2/2/3/2/2 \qquad (11)$$

$$2/2/2/2/2/2 : 2/2/2/2/2/2 \qquad (12)$$

$$2/2/2/2/2/2/2 : 2/2/2/2/2/2/2 \qquad (13)$$

$$2/2/2//2 : 2//2/2/2 : 2//2/2/2 \qquad (14)$$

$$2/2//2/2 : 2/2//2/2 : 2/2//2/2 \qquad (15)$$

et

$$3/3/3//3 : 3/3//3/3 : 3//3/3/3 \qquad (16)$$

$$3//3/3/3 : 3/3//3/3 : 3/3/3//3 \qquad (17)$$

$$3/3/3/3/3//3 : 3//3/3/3/3/3 \qquad (18)$$

$$3/3/3//3 :3//3/3/3 :3//3/3/3 \qquad (19)$$

Le vitrage d'essai (11) résiste pendant 129mn au test au feu. Comme précédemment cette structure est particulièrement avantageuse qui offre à la fois de bonnes propriétés anti-feu associées à une épaisseur bien maîtrisée.

Ce vitrage est de 1200x2000mm.

Parmi les structures (16) à (19), la structure 19 présente l'avantage d'être entièrement constituée d'un seul et même module 3/3/3//3 répété trois fois dans l'assemblage avec les deux feuilles intercalaires. La production est donc largement simplifiée par rapport aux autres structures.

La quantité de solution déposée sur chaque feuille de verre avant séchage était de 4,2 litre/m². Après séchage chaque couche intumescente était de 1,56mm d'épaisseur. L'épaisseur totale du vitrage était de 53mm.

Le vitrage d'essai (16) est de mêmes dimensions que le précédent. Sa résistance au feu est de 123mn.

Pour ce vitrage la même composition de départ est déposée sur les feuilles de verre à raison de 4 litre/m². Après séchage chaque couche intumescente est de 1,45mm d'épaisseur. L'épaisseur totale du vitrage est 53,3mm.

**Revendications**

1. Vitrage anti-feu classé soit EI 90 soit EI 120 selon les normes EN 1363-1 et 1364-1 pour l'étanchéité et l'isolation, constitué d'un ensemble feuilleté comprenant plus de quatre feuilles de verre et des couches de matériau intumescent à base de silicates alcalins hydratés, dans lequel les couches de matériau intumescent ont chacune une épaisseur de 1,4 à 2mm, lorsque chaque couche est séparée par une feuille de verre, le cas échéant des couches de ce matériau pouvant être accolées deux à deux, et comportant éventuellement en plus une ou plusieurs feuilles de matériau intercalaire entre deux feuilles de verre, et dans lequel :

   ■ soit le nombre de feuilles de verre est égal au nombre de couches intumescentes, le vitrage comportant au moins deux ensembles formés de deux couches accolées, et au moins autant de feuilles intercalaires moins une qu'il y a d'ensembles de couches accolées, les feuilles de verre en nombre égal à celui des couches intumescentes étant chacune d'épaisseur au plus égale à 4mm
   ■ soit le nombre de feuilles de verre est supérieur à celui des couches intumescentes, un nombre de feuilles de verre égal à celui des couches intumescentes présentant une épaisseur au plus égale à 2,5mm.

   le vitrage présentant une épaisseur totale au plus égale à :

   ■ 37mm pour EI 90
   ■ 54mm pour EI 120.

2. Vitrage anti-feu selon la revendication 1 dans lequel le nombre de couches intumescentes est égal au nombre de feuilles de verre, et le vitrage comporte au moins deux ensembles de couches accolées, chacune des feuilles de verre étant d'épaisseur au plus égale à 3,1mm.

**3.** Vitrage selon la revendication 2 dans lequel les feuilles de verre en nombre égal à celui des couches intumescentes ont une épaisseur au plus égale à 2,3mm.

**4.** Vitrage selon la revendication 3 dans lequel les feuilles de verre en nombre égal à celui des couches intumescentes ont une épaisseur au plus égale à 2,1mm.

**5.** Vitrage selon l'une des revendications précédentes dans lequel les couches de matériau intumescent ont une épaisseur comprise entre 1,5 et 1,8mm.

**6.** Vitrage selon la revendication 1 dans lequel le nombre de feuille de verre est supérieur à celui des couches intumescentes, vitrage comprenant au moins une feuille de verre d'épaisseur au moins égale à 5mm.

**7.** Vitrage selon la revendication 6 comprenant au moins une feuille de verre d'épaisseur au moins égale à 6mm.

**8.** Vitrage selon la revendication 1 comportant au moins 4 couches de matériau intumescent et le même nombre de feuilles de verre plus deux, deux des feuilles de verre étant réunies au moyen d'une feuille intercalaire d'un matériau plastique de type PVB ou EVA.

**9.** Vitrage selon la revendication 1 répondant aux normes des vitrages d'étanchéité et d'isolation EI 90 dont la composition à base d'éléments unitaires constitués d'une feuille de verre de 2mm est l'une des suivantes :

2/2/2/2/2 : 2/2/2/2/2
2/2/3/2/2 : 2/2/3/2/2
2/2/4/2/2 : 2/2/4/2/2
2/2/2//2 : 2//2/2/2
2/2//2/2 : 2/2//2/2
2//2/2/2 : 2/2/2//2

les différents constituants étant notés de la façon suivante :

- chaque feuille de verre est indiquée par son épaisseur (en mm ;)
- chaque couche intumescente est notée par (/) ;
- chaque feuille intercalaire plastique de type PVB est notée par ( : )

**10.** Vitrage selon la revendication 1 répondant aux normes des vitrages d'étanchéité et d'isolation EI 90 dont la composition à base d'éléments unitaires constitués d'une feuille de verre de 3mm est l'une des suivantes :

3/3/3//3 : 3//3/3/3
3/3//3/3 : 3/3/3/3
3//3/3/3 : 3/3/3//3

les différents constituants étant notés de la façon suivante :

- chaque feuille de verre est indiquée par son épaisseur (en mm ;)
- chaque couche intumescente est notée par (/) ;
- chaque feuille intercalaire plastique de type PVB est notée par ( : )

**11.** Vitrage selon la revendication 1 répondant aux normes des vitrages d'étanchéité et d'isolation EI 120 dont la composition à base d'éléments unitaires constitués d'une feuille de verre de 2mm est l'une des suivantes :

2/2/2/2/2 : 2/2/2/2/2 : 2/2/2/2/2
2/2/3/2/2 : 2/2/3/2/2 : 2/2/3/2/2
2/2/2/2/2/2 : 2/2/2/2/2/2
2/2/2/2/2/2/2 : 2/2/2/2/2/2/2
2/2/2//2 : 2//2/2/2 : 2//2/2/2
2/2//2/2 : 2/2//2/2 : 2/2//2/2

les différents constituants étant notés de la façon suivante :

- chaque feuille de verre est indiquée par son épaisseur (en mm ;)
- chaque couche intumescente est notée par (/) ;
- chaque feuille intercalaire plastique de type PVB est notée par ( : ).

**12.** Vitrage selon la revendication 1 répondant aux normes des vitrages d'étanchéité et d'isolation EI 120 dont la composition à base d'éléments unitaires constitués d'une feuille de verre de 3mm est l'une des suivantes :

3/3/3//3 : 3/3//3/3 : 3//3/3/3
3//3/3/3 : 3/3//3/3 : 3/3/3//3
3/3/3/3/3//3 : 3//3/3/3/3/3

les différents constituants étant notés de la façon suivante :

- chaque feuille de verre est indiquée par son épaisseur (en mm ;)
- chaque couche intumescente est notée par (/) ;
- chaque feuille intercalaire plastique de type PVB est notée par ( : ).

**Patentansprüche**

1. Brandschutzverglasung, welche entweder als EI 90 oder EI 120 gemäß den Normen EN 1363-1 und 1364-1 hinsichtlich der Dichtheit und Isolierung klassifiziert wird, bestehend aus einer Scheibeneinheit, umfassend vier Glasscheiben und intumeszente Materialschichten auf der Basis von hydratisierten Alkalisilikaten, wobei die intumeszenten Materialschichten jeweils eine Dicke von 1,4 bis 2 mm aufweisen, wenn jede Schicht durch eine Glasscheibe getrennt ist, wobei gegebenenfalls von den Schichten dieses Materials jeweils zwei zusammengefügt sein können, und umfassend gegebenenfalls außerdem eine oder mehrere Zwischenmaterialfolien zwischen zwei Glasscheiben, und wobei:

   - entweder die Anzahl von Glasscheiben gleich der Anzahl von intumeszenten Schichten ist, wobei die Verglasung mindestens zwei Einheiten, die aus zwei zusammengefügten Schichten gebildet sind, und mindestens genauso viele Zwischenfolien minus einer, wie Einheiten zusammengefügter Schichten vorliegen, umfasst, wobei die Glasscheiben mit der Anzahl gleich jener der intumeszenten Schichten jeweils eine Dicke von höchstens gleich 4 mm aufweisen,
   - oder die Anzahl von Glasscheiben größer ist als jene er intumeszenten Schicht, wobei eine Anzahl von Glasscheiben gleich jener der intumeszenten Schichten eine Dicke von höchstens gleich 2,5 mm aufweist,
   wobei die Verglasung eine Gesamtdicke von höchstens gleich:

      - 37 mm für EI 90,
      - 54 mm für EI 120

   aufweist.

2. Brandschutzverglasung nach Anspruch 1, wobei die Anzahl von intumeszenten Schichten gleich ist der Anzahl der Glasscheiben, und die Verglasung mindestens zwei Einheiten zusammengefügter Schichten umfasst, wobei jede der Glasscheiben eine Dicke von höchstens gleich 3,1 mm aufweist.

3. Verglasung nach Anspruch 2, wobei die Glasscheiben mit der Anzahl gleich jener der intumeszenten Schichten eine Dicke von höchstens gleich 2,3 mm aufweisen.

4. Verglasung nach Anspruch 3, wobei die Glasscheiben mit der Anzahl gleich jener der intumeszenten Schichten eine Dicke von höchstens gleich 2,1 mm aufweisen.

5. Verglasung nach einem der vorhergehenden Ansprüche, wobei die Schichten des intumeszenten Materials eine Dicke zwischen 1,5 und 1,8 mm aufweisen.

6. Verglasung nach Anspruch 1, wobei die Anzahl von Glasscheiben größer ist als jene der intumeszenten Schichten, wobei die Verglasung mindestens eine Glasscheibe mit einer Dicke von mindestens gleich 5 mm umfasst.

7. Verglasung nach Anspruch 6, umfassend mindestens eine Glasscheibe mit einer Dicke von mindestens gleich 6 mm.

8. Verglasung nach Anspruch 1, umfassend mindestens 4 Schichten des intumeszenten Materials und die gleiche Anzahl von Glasscheiben plus zwei, wobei zwei der Glasscheiben mit einer Zwischenfolie aus einem Kunststoffmaterial vom Typ PVB oder EVA verbunden sind.

9. Verglasung nach Anspruch 1, welche den Normen für Verglasungen hinsichtlich der Dichtheit und Isolierung EI 90 entspricht, deren Zusammensetzung auf der Basis von einheitlichen Elementen, bestehend aus einer Glasscheibe mit 2 mm, eine der folgenden ist:

      2/2/2/2/2 : 2/2/2/2/2
      2/2/3/2/2 : 2/2/3/2/2
      2/2/4/2/2 : 2/2/4/2/2
      2/2/2//2 : 2//2/2/2
      2/2//2/2 : 2/2//2/2
      2//2/2/2 : 2/2/2//2

   wobei die verschiedenen Bestandteile auf folgende Weise festgelegt sind:

      - jede Glasscheibe wird durch ihre Dicke (in mm) angegeben;
      - jede intumeszente Schicht wird mit (/) bezeichnet;
      - jede Kunststoffzwischenfolie vom Typ PVB wird mit ( : ) bezeichnet.

10. Verglasung nach Anspruch 1, welche den Normen für Verglasungen hinsichtlich der Dichtheit und Isolierung EI 90 entspricht, deren Zusammensetzung auf der Basis von einheitlichen Elementen, bestehend aus einer Glasscheibe mit 3 mm, eine der folgenden ist:

      3/3/3//3 : 3//3/3/3
      3/3//3/3 : 3/3//3/3
      3//3/3/3 : 3/3/3//3

   wobei die verschiedenen Bestandteile auf folgende Weise festgelegt sind:

> - jede Glasscheibe wird durch ihre Dicke (in mm) angegeben;
> - jede intumeszente Schicht wird mit (/) bezeichnet;
> - jede Kunststoffzwischenfolie vom Typ PVB wird mit ( : ) bezeichnet.

11. Verglasung nach Anspruch 1, welche den Normen für Verglasungen hinsichtlich der Dichtheit und Isolierung EI 120 entspricht, deren Zusammensetzung auf der Basis von einheitlichen Elementen, bestehend aus einer Glasscheibe mit 2 mm, eine der folgenden ist:

> 2/2/2/2/2 : 2/2/2/2/2 : 2/2/2/2/2
> 2/2/3/2/2 : 2/2/3/2/2 : 2/2/3/2/2
> 2/2/2/2/2/2 : 2/2/2/2/2/2
> 2/2/2/2/2/2/2 : 2/2/2/2/2/2/2
> 2/2/2//2/2 : 2//2/2/2 : 2//2/2/2
> 2/2//2/2 : 2/2//2/2 : 2/2//2/2

wobei die verschiedenen Bestandteile auf folgende Weise festgelegt sind:

> - jede Glasscheibe wird durch ihre Dicke (in mm) angegeben;
> - jede intumeszente Schicht wird mit (/) bezeichnet;
> - jede Kunststoffzwischenfolie vom Typ PVB wird mit ( : ) bezeichnet.

12. Verglasung nach Anspruch 1, welche den Normen für Verglasungen hinsichtlich der Dichtheit und Isolierung EI 120 entspricht, deren Zusammensetzung auf der Basis von einheitlichen Elementen, bestehend aus einer Glasscheibe mit 3 mm, eine der folgenden ist:

> 3/3/3//3 : 3/3//3/3 : 3//3/3/3
> 3//3/3/3 : 3/3//3/3 : 3/3/3//3
> 3//3/3/3/3//3 : 3//3/3/3/3/3

wobei die verschiedenen Bestandteile auf folgende Weise festgelegt sind:

> - jede Glasscheibe wird durch ihre Dicke (in mm) angegeben;
> - jede intumeszente Schicht wird mit (/) bezeichnet;
> - jede Kunststoffzwischenfolie vom Typ PVB wird mit ( : ) bezeichnet.

**Claims**

1. Fire-resistant glazing classified either as EI 90 or EI 120 according to Standards EN 1363-1 and 1364-1 for tightness and insulation, formed of a laminated assembly comprising more than four glass sheets and layers of intumescent material based on hydrated alkali metal silicates, in which the layers of intumescent material each have a thickness of 1.4 to 2 mm, when each layer is separated by a glass sheet, it being possible, if appropriate, for layers of this material to be placed side by side in pairs, and optionally comprising, in addition, one or more sheets of interlayer material between two glass sheets, and in which:

> ▪ either the number of glass sheets is equal to the number of intumescent layers, the glazing comprising at least two assemblies formed of two layers placed side by side, and at least as many interlayer sheets minus one as there are of assemblies of layers placed side by side, the glass sheets, in number equal to that of the intumescent layers, each having a thickness at most equal to 4 mm
> ▪ or the number of glass sheets is greater than that of the intumescent layers, a number of glass sheets equal to that of the intumescent layers exhibiting a thickness at most equal to 2.5 mm

the glazing exhibiting a total thickness at most equal to:

> ▪ 37 mm for EI 90
> ▪ 54 mm for EI 120.

2. Fire-resistant glazing according to Claim 1, in which the number of intumescent layers is equal to the number of glass sheets, and the glazing comprises at least two assemblies of layers placed side by side, each of the glass sheets having a thickness at most equal to 3.1 mm.

3. Glazing according to Claim 2, in which the glass sheets, in number equal to that of the intumescent layers, have a thickness at most equal to 2.3 mm.

4. Glazing according to Claim 3, in which the glass sheets, in number equal to that of the intumescent layers, have a thickness at most equal to 2.1 mm.

5. Glazing according to one of the preceding claims, in which the layers of intumescent material have a thickness of between 1.5 and 1.8 mm.

6. Glazing according to Claim 1, in which the number of glass sheets is greater than that of the intumescent layers, which glazing comprises at least one glass sheet with a thickness at least equal to 5 mm.

7. Glazing according to Claim 6, comprising at least one glass sheet with a thickness at least equal to 6 mm.

8. Glazing according to Claim 1, comprising at least four layers of intumescent material and the same number of glass sheets plus two, two of the glass sheets being joined together by means of an interlayer sheet of a plastic material of PVB or EVA type.

9. Glazing according to Claim 1, corresponding to the standards for tightness and insulation glazings EI 90, the composition of which, based on unitary elements formed of a 2 mm glass sheet, is one of the following:

> 2/2/2/2/2 : 2/2/2/2/2
> 2/2/3/2/2 : 2/2/3/2/2
> 2/2/4/2/2 : 2/2/4/2/2
> 2/2/2//2 : 2//2/2/2
> 2/2//2/2 : 2/2//2/2
> 2//2/2/2 : 2/2/2//2

the different constituents being denoted in the following way:

- each glass sheet is indicated by its thickness (in mm);
- each intumescent layer is denoted by (/);
- each plastic interlayer sheet of PVB type is denoted by ( : ).

10. Glazing according to Claim 1, corresponding to the standards for tightness and insulation glazings EI 90, the composition of which, based on unitary elements formed of a 3 mm glass sheet, is one of the following:

> 3/3/3//3 : 3//3/3/3
> 3/3//3/3 : 3/3//3/3
> 3//3/3/3 : 3/3/3//3

the different constituents being denoted in the following way:

- each glass sheet is indicated by its thickness (in mm);
- each intumescent layer is denoted by (/);
- each plastic interlayer sheet of PVB type is denoted by (:).

11. Glazing according to Claim 1, corresponding to the standards for tightness and insulation glazings EI 120, the composition of which, based on unitary elements formed of a 2 mm glass sheet, is one of the following:

> 2/2/2/2/2 : 2/2/2/2/2 : 2/2/2/2/2
> 2/2/3/2/2 : 2/2/3/2/2 : 2/2/3/2/2

> 2/2/2/2/2/2 : 2/2/2/2/2/2
> 2/2/2/2/2/2/2 : 2/2/2/2/2/2/2
> 2/2/2//2 : 2//2/2/2 : 2//2/2/2
> 2/2//2/2 : 2/2//2/2 :2/2//2/2

the different constituents being denoted in the following way:

- each glass sheet is indicated by its thickness (in mm);
- each intumescent layer is denoted by (/);
- each plastic interlayer sheet of PVB type is denoted by (:).

12. Glazing according to Claim 1, corresponding to the standards for tightness and insulation glazings EI 120, the composition of which, based on unitary elements formed of a 3 mm glass sheet, is one of the following:

> 3/3/3//3 : 3/3//3/3 : 3//3/3/3
> 3//3/3/3 : 3/3//3/3 : 3/3/3//3
> 3/3/3/3/3//3 : 3//3/3/3/3/3

the different constituents being denoted in the following way:

- each glass sheet is indicated by its thickness (in mm);
- each intumescent layer is denoted by (/);
- each plastic interlayer sheet of PVB type is denoted by (:).

a

1        2

**Fig.1**

a     a          a

1              2

**Fig.2**

a     a          a     a

3
4

**Fig.3**

a     a

**Fig.4**

a     a          a     a

5

**Fig.5**

Fig.6

Fig.7

Fig.8

Fig.9